# EUROPEAN PATENT APPLICATION

(11) **EP 3 592 112 A1**
(43) Date of publication of application: **08.01.2020**
(21) Application number: 18181246.2
(22) Date of filing: 02.07.2018
(51) Int. Cl.: H05B 33/08

(54) **A LIGHTING CIRCUIT AND CONTROL METHOD**

(71) Applicant: Signify Holding B.V., 5656 AE Eindhoven (NL)
(72) Inventor: The designation of the inventor has not yet been filed
(74) Representative: Verweij, Petronella Daniëlle

(57) **Abstract**

A lighting circuit comprises driver for providing a regulated current. A lighting load has at least two light sources with different light output characteristics and a reactive element. A switch is used to pass the regulated current from the driver to one of the light sources and the reactive element, or else to allow energy associated with the reactive element to flow to the second light source. The switch is thus used to control a ratio of energy to, thereby a ratio of light output characteristics from, the first and second light sources.

## Description

### FIELD OF THE INVENTION

This invention relates to lighting circuits, in particular LED lighting circuits, and a driving method.

### BACKGROUND OF THE INVENTION

LED lighting is transforming the lighting industry. LED bulbs are being designed to be a direct replacement for their counterpart incandescent and halogen bulbs for an ever increasing range of applications.

LED lighting also offers the possibility of very versatile designs from an aesthetic point of view. However, one fundamental difference between the normal appearance of an LED light source and an incandescent bulb is that an LED is a point source, whereas an incandescent bulb presents a line of illumination. Some users prefer the appearance of transparent incandescent bulbs, with a visible light source.

Filament LED bulbs have been developed, in which LED light sources are mounted on a strip which is arranged within a glass envelope, to match the appearance (and optical output) from an incandescent bulb. The glass envelope may be transparent or diffusive. Transparent LED bulbs with filaments are in particular becoming more and more popular. Market studies show that customers appreciate the appearance of these types of bulbs.

Apart from the difference in appearance of an LED array and a conventional incandescent light source, an LED bulb typically does not produce a color shift of the LED output during dimming. It has been recognized that it would be desirable for LED bulbs to have the same color temperature behavior as an incandescent lamp during dimming. The bulbs would then have a dimming characteristic which appears natural, based on the fact that people are accustomed to the way incandescent bulbs dim.

Apart from the dimming characteristic, it is of interest generally to be able to provide a color (or correlated color temperature, CCT) tuning function.

Natural dimming solutions have been proposed, for example in WO2010/103480. The control mechanism is based on changing the current ratio in at least two sets of LEDs with different color temperature. The color point is shifted to a warmer white color during dimming.

This arrangement however requires an electronic circuit to sense the dimmer setting, and then distribute currents to the different sets of LEDs. This adds complexity to the control scheme. For example, a known approach makes use of an comparator circuit which is used in combination with an analog dimming driver.

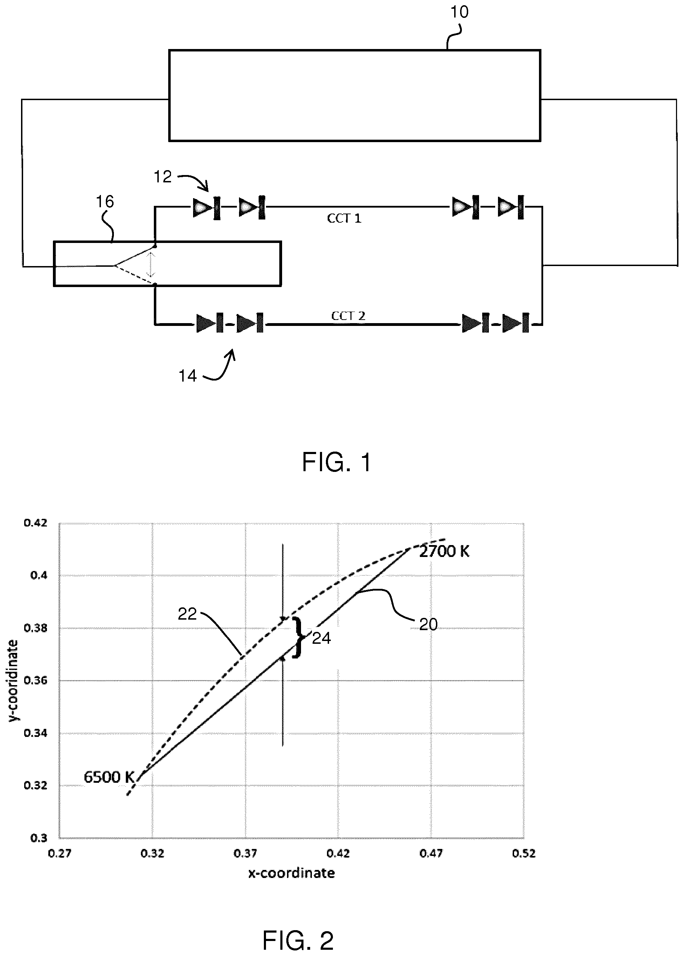

Figure 1 shows a most basic approach for providing CCT tuning by using a single current output driver 10 and applying a PWM current distribution between two LED strings 12, 14 each with different CCT values, using a switch 16 which is controlled with a pulse width modulation (PWM) switch control signal. In this way, CCT tuning is achieved in a linear way between the two CCT values of the two LED strings.

Figure 2 shows how the color point varies linearly (plot 20) between the two CCT values which in this example are 2700K and 6500K. Plot 22 shows the preferred non-linear black body line (BBL) 22 and Figure 2 shows the gap 24 between the two responses.

There is a need to be able to control the CCT output in a non-linear way, and with a simple circuit implementation.

### SUMMARY OF THE INVENTION

WO 2010/041183 discloses a buck converter which is designed to output a regulated current to a main LED load, and the buck converter further comprises two extra LED loads in two separate branches such that the current to a respective extra LED load is variable depending on the input voltage. The control of the light output characteristics is based on the control of the input voltage to the buck converter, which in turn alters the switching characteristics to achieve the desired output current. This results in a complicated control procedure and does not enable accurate control. This also requires an extra voltage regulator to change the input voltage and has a high cost.

The embodiments of the invention aim to provide an even simpler structure of driving different branches of lighting loads, wherein the contribution of the different branches can be adjusted.

The invention is defined by the claims.

According to examples in accordance with an aspect of the invention, there is provided a lighting circuit, comprising:
a driver for providing a regulated current;
a lighting load at the output of the driver, the lighting load comprising:
   a first circuit portion comprising a first light source having a first light output characteristic;
   a second circuit portion comprising a second light source having a second light output characteristic;
   a third circuit portion comprising a reactive element;
the lighting circuit further comprising:
   a switching circuit for allowing the regulated current from the driver to flow to the first and the third circuit portions so as to provide a third time-varying current to the reactive element and a first time-varying current to the first light source, and for allowing an energy associated with the reactive element to flow to the second light source; and
   a controller for controlling the timing of operation of the switch thereby controlling a duration of allowing the regulated current or a portion thereof to flow to the first circuit portion and the third circuit portion and thereby also controlling the energy flow to the second light source, so as to control a contribution to the overall light output characteristic from the first and second light sources.

The driver preferably has a pair of output terminals, and the first, second and third circuit portions together have a pair of input terminals which connect to the driver output terminals.

By using the reactive element, the current through it is time-varied. By adjusting the duration of current flowing through the reactive element, different levels of current/energy into it can be adjusted. Energy associated with the reactive element also flows to the second light source therefore the energy to the second light source is adjusted. Also the current to the first light source is time-varied therefore the energy to the first light source is adjusted. This circuit enables the combined output from (at least) first and second light sources to be controlled over time (i.e. when averaged over time) by adapting a switching operation. The switching enables a driving distribution among a first light source, a reactive element, and a second light source. By altering the driving duration, the combined lighting effect can be controlled. This enables implementation of non-linear (with respect to time) functions for combining the light output, but this is enabled with a simple circuit. The circuit may for example be used to provide controlled correlated color temperature (CCT) during changes in dimming level. This may be used to mirror the black body line (BBL).

The current provided to the circuit is regulated, which means it is constant or set by the driver when there is a connected load. This means the current is independent of the lighting load. Thus, the circuit is provided at the output of a regulated current driver, which itself typically comprises a switch mode power converter. The lighting load passively accepts the regulated current without changing it in total, though the lighting load may distribute the total regulated current differently to the circuit portions due to the reactive element.

The embodiment thus enables a ratio of different color temperatures to be implemented. Note that the first light output characteristic may be a (relatively) cold color temperature and the second light output characteristic may be a (relatively) warm color temperature. Alternatively, the first light output characteristic may be a warm color temperature and the second light output characteristic may be a cold color temperature.

The driver is preferably adapted to output a current with a constant peak amplitude, and the switching circuit further comprises a switch for selectively connecting or disconnecting the driver output current with respect to the first circuit portion and the third circuit portion of the lighting circuit, or the switching circuit is integrated in the driver and adapted to make the driver to output the regulated current in a pulse width modulation manner.

The switch thus controls the global delivery of energy to the circuit or else the use of stored energy. The current is provided in a pulse width modulation manner which is common for the known driver to provide. This provides a simple architecture. Alternatively the switching circuit is integrated in the driver.

The driver is a regulated (i.e. constant) current driver, and the current provided corresponds to an overall power delivery and hence light output. The reactive element for example has a changing current demand over time, with the result that the current supply to the rest of the circuit also varies over time. The switching times dictate which light sources are activated, and in combination a desired light output is obtained.

The light sources preferably each comprise a LED arrangement, and the third circuit portion is in parallel with the first circuit portion such that the third time-varying current into the reactive element and the first time-varying current to the first light source are separate components of the regulated current.

Currents in parallel connections are complementary thus the ratio of their respective energy can be adjusted conveniently.

The LED arrangement may comprise a single LED or an arrangement of series and/or parallel LEDs. The unidirectional conduction of the LEDs is used in the circuit to control the conduction paths which are active.

The first circuit portion for example comprises a light source which is driven by a forward path in parallel with an inductor (i.e. when the inductor is being energized by the driver), whereas the second circuit portion comprises a light source which is driven by a return path from the inductor (i.e. when the inductor is no longer being energized by the driver as a result of the operation of the switch, and the inductor then discharges to the second light source).

In the case of an inductor, when a current is supplied to the circuit, the inductor draws an increasing amount of current (i.e. it has a decreasing effective impedance) from zero. For a light source in series with the inductor, there will be a corresponding increasing current, whereas for a light source in parallel, there will be a corresponding decreasing current to maintain a fixed total current from the driver. The controller can control a ratio of current delivery to the inductor and current isolation from the inductor using the switch, and in this way control the currents flowing in different parts of the circuit.

Alternatively, the first circuit portion for example comprises a light source which is driven by a forward path in series with a capacitor (i.e. when the capacitor is being charged by the driver), whereas the second circuit portion comprises a light source which is driven by a return path from the capacitor (i.e. when the capacitor discharges to the second light source).

In the case of a capacitor, when a current is supplied to the circuit, the capacitor draws a decreasing amount of current as it charges (i.e. it has an increasing effective impedance). For a light source in series with the capacitor, there will be a corresponding decreasing current, whereas for a light source in parallel, there will be a corresponding increasing current to maintain a fixed total current from the driver. The controller can control a ratio of current delivery to the capacitor and current isolation from the capacitor using the switch, and in this way control the currents flowing in different parts of the circuit.

In a first example, the reactive element is adapted to charge with the third time-varying current and discharge stored energy to the second circuit portion, the controller is adapted to allow all the regulated current to flow to the first circuit portion and the third circuit portion, and the first, second and third circuits portions are connected in parallel with the first and second light sources having an opposite polarity.

The first light source is for example in a forward direction. With an inductor as the reactive element, as the current builds up in the inductor, the current available to the first light source drops. When the external driver energy is no longer provided, the inductor drives a current through the second light source, which is in a flyback current path.

In a second example, the circuit further comprises a fourth circuit portion comprising a fourth light source having a fourth light output characteristic, said fourth circuit portion connected between the parallel connection of the first and the third circuit portions and the second circuit portion.

The fourth light source is in a forward circuit path from the reactive element and the first and second light sources are in separate feedback circuit paths from the reactive element. In this way, there is a fourth light source in series with the reactive element, so that it receives the current through the reactive element, and a first light source in parallel, which receives a difference current when the driver is delivering energy. The second light source is in a flyback path. Thus, this arrangement combines series and parallel light sources. A single switch control is then used to control the three light sources, and this can enable further lighting effects to be obtained.

In another set of examples, the first circuit portion is in series with the reactive element and thereby in a charging path such that the third time-varying current into the reactive element and the first time-varying current to the first light source are same components of the regulated current, and the second circuit portion is connected to the capacitor to close a discharging path of the reactive element.

The reactive element may again be a capacitor or an inductor. If a capacitor is used as the reactive element, the first light source is in series with the capacitor, so as the capacitor is charged by energy delivery from the driver, the current to the first light source drops. The switch is arranged so that when opened, the capacitor is able to discharge through the second light source. There may be two sub-switches (controlled synchronously and together implementing the required switching) to implement the required current paths. When a capacitor is used, it may be connected to a series resistor, to control the RC charging time constant and to provide a current limiting function.

The controller may be adapted to control a portion of the regulated current to flow to the first circuit portion and the third circuit portion and:
the lighting circuit further comprising a fourth circuit portion comprising a fourth light source having a fourth light output characteristic, said fourth circuit portion connected in the parallel with the series connection of the first circuit portion and the reactive element and adapted to receive a rest of the regulated current.

The circuit may further comprise a fifth circuit portion comprising a fifth light source having a fifth light output characteristic and a second switch for connecting the driver to the fifth circuit portion, wherein the fifth circuit portion and second switch form a parallel branch to the remainder of the circuit, and the controller is adapted to turn on said second switch and the switch for controlling the energy transfer in an alternative manner.

This arrangement has two switches, and this enables greater control of the combining function which combines the light outputs from the different light sources.

In another set of examples, the first circuit portion and the third circuit portion are in series such that the third time-varying current into the reactive element and the first time-varying current to the first light source are same a portion of the regulated current, the second circuit portion is in parallel with the series combination of the first and third circuit portions such that the energy associated with the reactive element to flow to the second light source is the rest of the regulated current.

This arrangement uses a capacitor or inductor to provide a time varying function which controls the splitting of current between the first and second light sources. The first and second light sources in this arrangement may have the same polarity, i.e. their anodes connect (directly or indirectly) to the positive driver output.

The circuit may comprise a fourth circuit portion having a fourth light source, wherein the fourth circuit portion is in parallel with the first circuit portion and the discharging circuit comprises a switch which connects the driver to either the first to third circuit portions or to the fourth circuit portion.

During a charging phase, the capacitor or inductor take energy from the driver and this influences the splitting of current. During a discharging phase, the driver connects to the fourth light source. In combination, the overall light output is controlled.

In all examples above, the reactive element may be an inductor or a capacitor.

The controller may be adapted to close the switch cyclically, and during each cycle to route energy from the driver to the first light source and the reactive load for the time duration, wherein the time duration is adjusted:
either less than a period by which the reactive element reaches saturation; or
equal or more than the period by which the reactive element reaches saturation, thereby the controller being adapted to adjust the ratio of energy to the first light source and to the second light source.

By adjusting the length of the pulse up to a duration corresponding to saturation of the reactive element, the greatest range of control is made possible.

The light output characteristic may be a color or color temperature.

The controller may be adapted to control the switch with a variable time interval between the time durations, thereby setting a light output intensity.

The controller may be used to adjust a duty cycle and a frequency of the switch control signal. By controlling these two parameters, both the output power and the overall lighting characteristics, in particular CCT, can be controlled.

The invention also provides a method of controlling a lighting circuit, the lighting circuit comprising: a driver adapted output a regulated current; a first circuit portion comprising a first light source having a first light output characteristic; a second circuit portion comprising a second light source having a second light output characteristic; and a third circuit portion comprising a reactive element, wherein the method comprises:
controlling the regulated current from the driver to the reactive element and to the first light source so as to provide a third time-varying current to the reactive element and a first time-varying current to the first light source and an energy associated with the reactive element to the second light source, by controlling the timing of operation of a switching circuit, thereby to control a contribution to the overall light output characteristic from the first and second light sources.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a most basic approach for providing CCT tuning by using a single current output driver;
Fig. 2 shows how the color point varies linearly between the two CCT values for the circuit of Figure 1;
Fig. 3 shows a first, and most simple, example of a lighting circuit which comprises a driver for providing a regulated current;
Fig. 4 shows two different duty cycles for the dimming signal DS;
Fig. 5 shows a second example of a lighting circuit;
Fig. 6 shows the current waveforms for two different duty cycles of the circuit of Fig. 5;
Fig. 7 shows a modification to the circuit of Fig. 6 in which there is an additional circuit and light source;
Fig. 8 shows the current waveforms, for two different duty cycles of the circuit of Fig. 7;
Fig. 9 shows a first example using a capacitor as the reactive element;
Fig. 10 shows the current waveforms for the operation of the circuit of Fig. 9;
Fig. 11 shows a modification to the circuit of Fig. 9, in which there is an additional circuit portion and light source; This arrangement may thus be considered to be a capacitor version of the circuit of Fig. 7.
Fig. 12 shows the current waveforms, for two different duty cycles of the circuit of Fig. 11;
Fig. 13 shows another circuit example;
Fig. 14 shows an implementation of the circuit of Fig. 13 in which the reactive element is a capacitor; and
Fig. 15 shows the current waveforms for the circuit of Fig. 14.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a lighting circuit which comprises driver for providing a regulated current. A lighting load has at least two light sources with different light output characteristics and a reactive element. A switch is used to pass the regulated current from the driver to the reactive element and the first light source, and to allow energy associated with the reactive element to flow to the second light source. The switch is thus used to control a ratio of energy to, thereby a ratio of light output characteristics from, the first and second light sources.

In the description below, the various circuits are described in terms of the light sources and circuit portions which make up the circuit. For ease of reading, when a circuit portion comprises a light source, they are given the same identification number, for example a fourth circuit portion by definition has a fourth light source. However, this does not imply that there must be first to third light sources. For example, a circuit may comprise only first, second and fourth light sources, because the third circuit portion does not have a light source. The description and claims should be understood accordingly.

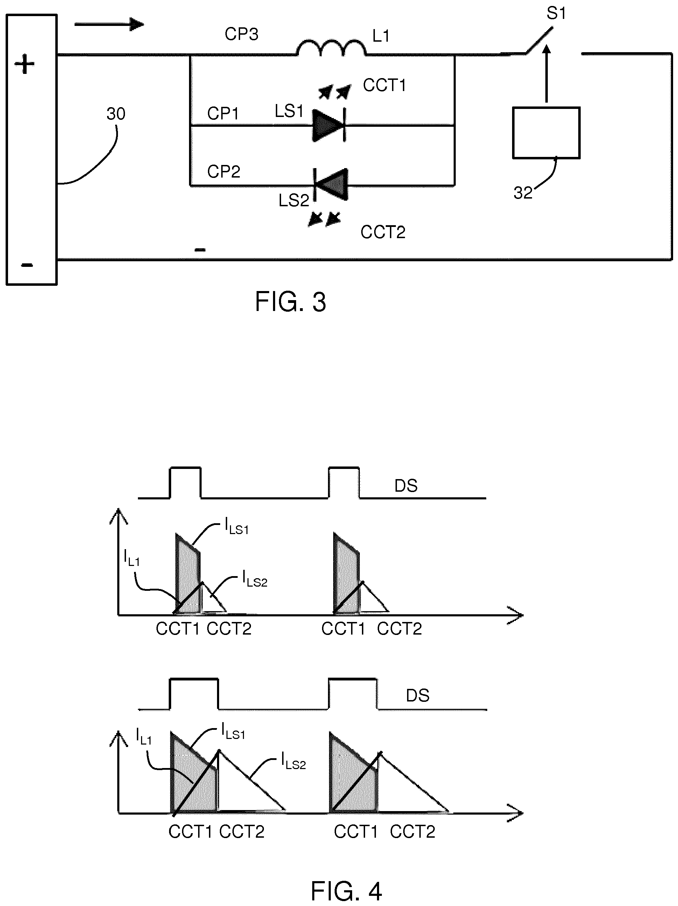

Figure 3 shows a first, and most simple, example of a lighting circuit which comprises a driver 30 for providing a regulated current to a lighting load.

The driver 30 for example comprises a switch mode power supply which provides an output current with a constant peak amplitude. This constant peak amplitude is provided when a load is connected to the driver. The driver is thus a regulated (i.e. constant) current driver, and the current provided corresponds to an overall power delivery and hence light output. Here the term "constant" means the current is as set by the driver independent of the lighting loads, and the driver may be capable of setting the current at different constant levels. The lighting circuit aims to redistribute the constant current over time between light sources with different color characteristics, in particular by making use of energy storage and release in a reactive element. The reactive element usually allows a time-varied current thus by adjusting the time duration, the current distribution can be adjusted. The circuit avoids the need to control the energy source to the circuit, i.e. the regulated current driver, which means that a standard regulated current driver may be used without modification.

The lighting load comprises a first circuit portion CP1 comprising a first light source LS1 having a first light output characteristic CCT1, and a second circuit portion CP2 comprising a second light source LS2 having a second light output characteristic CCT2.

A third circuit portion CP3 comprises a reactive element which in the example of Figure 3 is an inductor L1.

The light sources comprise a LED or a series string of LEDs. They thus have unidirectional current direction, and this is used to provide control of current flows in the circuit as will be clear from the description below.

In the example of Figure 3, the first light source LS1 and the second light source LS2 are in parallel with the inductor L1. The first light source is oriented with a polarity which matches the direction of current flow from the driver 30, i.e. driver current can flow directly through the light source LS1. The second light source is oriented with an opposite polarity. The first light source LS1 may be considered to be oriented in a forward direction with its anode connected to the positive terminal of the driver, whereas the second light source LS2 may be considered to be oriented in a reverse direction with its cathode connected to the positive terminal of the driver.

A switch S1 is provided for allowing (when closed) the regulated current from the driver to flow to the first and the third circuit portions so as to provide a third time-varying current to the inductor ("third" because it is in the third circuit portion) and a first time-varying current to the first light source. When the switch is open, an energy associated with the inductor flows to the second light source.

A controller 32 is provided for controlling the timing of operation of the switch S1. This thereby controls a duration of allowing the regulated current to flow to the first circuit portion CP1 and the third circuit portion CP3 so as to control a ratio of energy to, thereby a ratio of light output characteristics from, the first and second light sources LS1, LS2. Alternatively, the switching circuit S1 and the controller 32 can be integrated within the driver 30 itself and the driver 30 is implemented as a current regulator operating in PWM (burst control) manner.

When the switch S1 is closed or the driver 30 works in a high duty cycle state of the PWM control, the constant current is injected into the lighting load. As the current builds up in the inductor from zero, the current available to the first light source LS1 drops because the received current is constant. When the external driver energy is no longer provided, the inductor drives a current through the second light source, which is in a flyback current path.

The switch S1 thus controls the global delivery of energy to the circuit or else the use of stored energy. This provides a simple architecture.

The switch is for example operated with a frequency between 100Hz and 10KHz, for example 200Hz to 5kHz. This is a relatively low operation frequency compare to the higher frequencies typically used in a switch mode power supply, for example as used in the driver 30.

The driver 30 has an overall current sense-feedback control to regulate its current output. However, this regulation is independent of the lighting circuit. The driver simply injects a constant/regulated current to the downstream lighting circuit.

The switch S1 which implements the dimming control and the current redistribution function may be part of the lighting circuit (as shown) or it may be integrated in the driver so that the driver outputs a PWM signal directly to the lighting circuit, and there is no switch S1 outside.

If the switch S1 is outside the driver (as shown), the will have a mechanism to avoid over powering when there is an open circuit at the output (i.e. when the switch S1 is open). If may for example detect an over voltage on an output capacitor, and then enter a voltage control mode.

If the S1 is inside the driver 30, a conventional PWM controlled current driver is implemented, as is well known. The driver may work in burst mode.

Figure 4 is a timing diagram to explain the operation of the circuit of Figure 3.

The control signal provided by the controller 32 is a dimming signal DS. Note that the output current of the driver has the same shape as the dimming signal DS, with a constant peak current during the times of energy delivery to the circuit, i.e. when the switch S1 is closed so that there is a connected load. The switching circuit is implemented by a physical switch like a transistor, MOSFET or any other solid state switch component.

Figure 4 shows two different duty cycles for the dimming signal DS.

The top image of the two shows a low duty cycle. Initially, the full driver current flows to the first light source, because the inductor initially limits but gradually ramps up its current demand. The inductor current is shown as I_{L1}. As it increases, the current to the first light source drops. The light source current is shown as I_{LS1}. The two currents are complementary and their sum is always the constant input current from the driver.

When the switch is open, the stored energy in the inductor is transferred to the second light source giving the light source current I_{LS2}. Note the peak amplitude of the inductor current and the second light source current are the same therefore they are connected.

The bottom image shows a larger duty cycle. It can be seen that there is a greater contribution from the second light source, and the ratio of light output intensity between them has changed.

The lower the duty cycle, the higher the ratio of current/energy of the first light source to that of the second light source.

This circuit thus enables the combined output from two light sources to be controlled over time (i.e. when averaged over time) by adapting the switching operation. The switching enables alternation between driving the first light source and the inductor, and the use of the energy stored to drive the second light source. Non-linear functions can be implemented for combining the light output, but with a simple circuit. The circuit may for example be used to provide controlled correlated color temperature (CCT) during changes in dimming level. This may be used to mirror more closely the black body line (BBL).

The first light output characteristic may be a cold color temperature and the second light output characteristic may be a warm color temperature. Alternatively, the first light output characteristic may be a warm color temperature and the second light output characteristic may be a cold color temperature.

It can be seen from Figure 4 that the frequency (i.e. the period that is Ton plus Toff) of the pulses are the same, but the duty cycle (Ton) is different so the two settings have different output power (lumen). If the same lumen is required, the frequency for the first implementation can be increased (making the shorter pulses denser), or the frequency of the second implementation can be decreased (making the longer pulses sparser). Therefore, by controlling the length of each pulse and the frequency of the pulse, both output power (lumen) and color point can be tuned.

The implementation of Figures 3 and 4 achieves a largest ratio of CCT1 to CCT2 which is theoretically infinite (the pulse length is very small) and the smallest ratio is 1:1 (the pulse length equals or exceeds the saturation threshold of the inductor) in case the inductor is not saturated. A contribution to the overall light output characteristic from the first and second light sources are thus adjusted based on the level of saturation. By way of example, if the lamp is mainly a cold light lamp, the CCT1 color can be a cold temperature while the CCT2 color is a warm temperature to partially compensate. The opposite can be applied for a warm light lamp. If the inductor is made saturated, the ratio is still 1:1 but there will be energy that is neither stored in the inductor nor passing through the first light source thereby wasted.

In the examples below, the driver 30 and controller 32 are not shown, to keep the circuits simple. Thus, the examples show alternative configurations for the light sources, the reactive element, switch, and other circuit components.

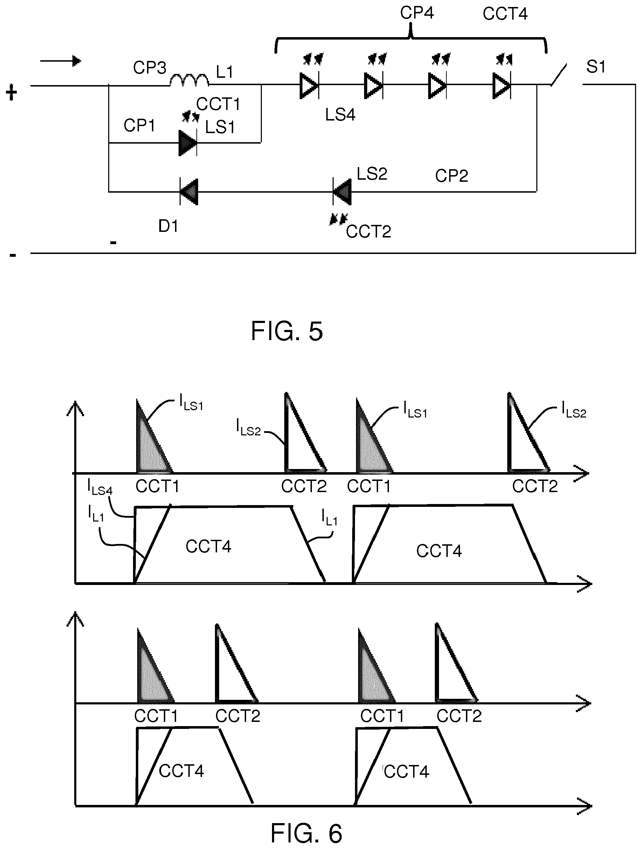

Figure 5 shows a second example, wherein the inductor can be made saturated.

In this second example, the lighting load further comprises a fourth circuit portion CP4 comprising a fourth light source LS4 having a fourth light output characteristic CCT4. The first and third circuit portions form a parallel block as in Figure 3. The fourth circuit portion CP4 is in series with this parallel block, and the second circuit portion is then in parallel with that series combination. Thus, the fourth circuit portion CP4 is connected between the parallel connection of the first and the third circuit portions CP1, CP3 and the second circuit portion CP2.

The fourth light source is thus in a forward circuit path from the inductor L1 and the first and second light sources LS1, LS2 are in separate feedback circuit paths from the inductor. The fourth light source receives the total current through the inductor and the first light source, and the first light source, in parallel with the inductor, receives a difference current when the driver is delivering energy. The second light source LS2 is in a flyback path. After the saturation of the inductor, it would not store any more energy, but the current still goes to the fourth light source. Therefore the longer the pulse, the ratio of energy of the fourth light source to that of the first and second light sources becomes larger.

Thus, this arrangement combines series and parallel light sources. A single switch control is then used to control the three light sources, and this can enable further lighting effects to be obtained.

The circuit of Figure 5 supports up to three different color LEDs and the system CCT is still compensated with a single dimming signal which controls the switch S1. CCT1 and CCT2 are used more when dimming down (because of the short pulse for the same pulse frequency). For example CCT4 may be a cold temperature, whereas CCT1 and CCT2 can be warm temperatures (high CCT). A naturally warm glow effect is achieved in which the color temperature gets higher (warmer) as the output lumen is lowered when dimming down. Given the same frequency, if the duty cycle is higher, the output lumen is increased and the color temperature becomes lower (colder).

Figure 6 shows the current waveforms for two different duty cycles of the switch S1. In both cases, the inductor reaches saturation. This means the light output from the first and second light sources, shown as currents I_{LS1} and I_{LS2} is constant. However, the variable component of the fourth light source I_{LS4} adjusts the contribution of the first and second light sources to the overall light output.

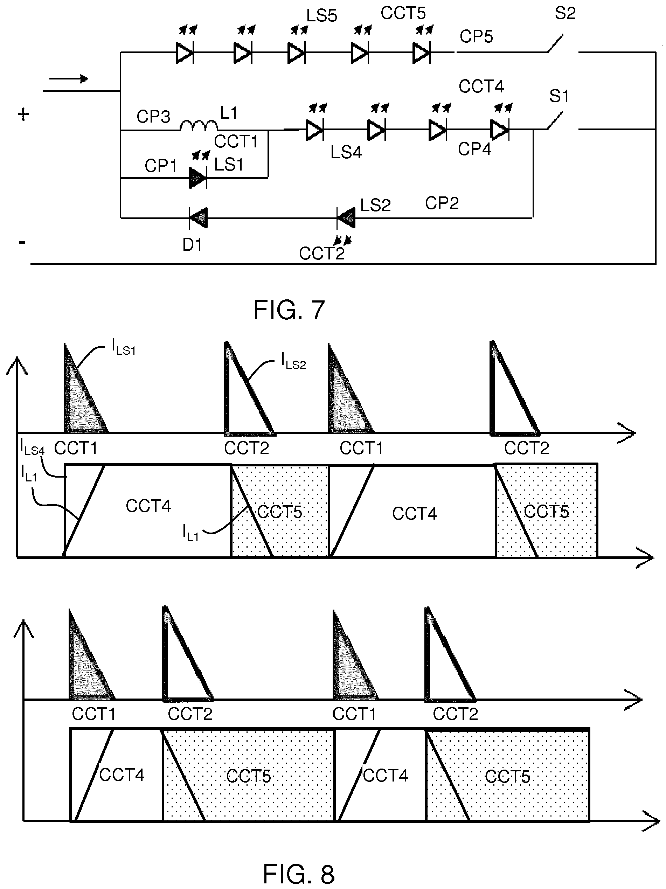

Figure 7 shows a modification to the circuit of Figure 6 in which there is additionally a fifth circuit portion CP5 comprising a fifth light source LS5 having a fifth light output characteristic CCT5 and a second switch S2 for connecting the driver to the fifth circuit portion CP5. The fifth circuit portion CP5 and the second switch S2 form a parallel branch to the remainder of the circuit. The controller is adapted to turn on the second switch S2 and the switch S1 for controlling the energy transfer in an alternative manner.

This arrangement has two switches, and this enables greater control of the combining function which combines the light outputs from the different light sources.

Figure 8 shows the current waveforms, for two different duty cycles. In the example of Figures 5 and 6, there is no light output when the switch S1 is open and after discharge of the inductor. In Figure 8, the fifth light source provides an output during this time (starting as soon as the switch states are changed).

In another set of examples, the reactive element is a capacitor.

In the above embodiments, the currents through the first circuit portion and the reactive element are different component of the regulated current. The below embodiments will describe that the first circuit portion and the reactive element receive the same portion of the regulated current.

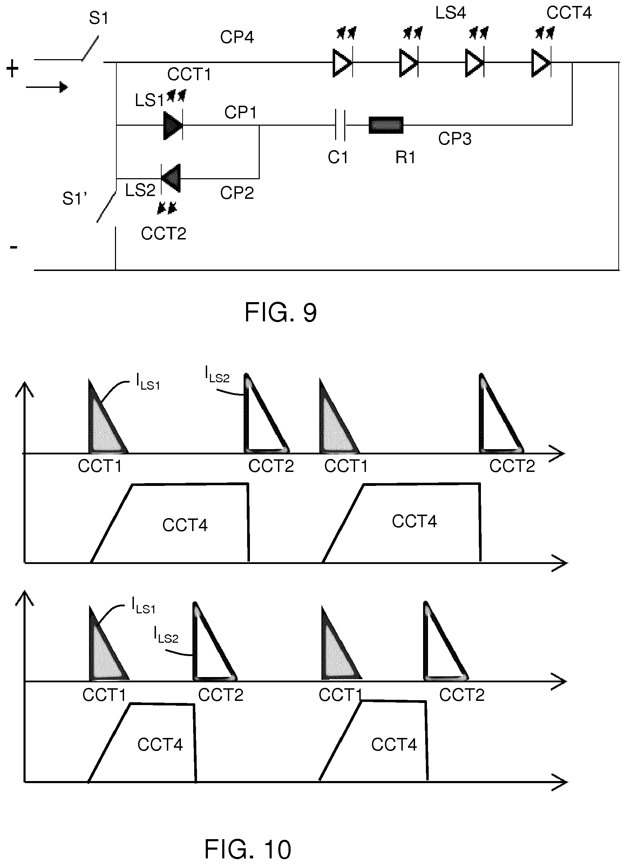

Figure 9 shows a first example. The third circuit portion CP3 comprises a series capacitor C1 and an optional resistor R1. The capacitor and resistor combination control the RC charging time constant and limit the current. In this case, the first circuit portion CP1 is in series with the capacitor C1 and thereby in a charging path of the capacitor C1, and the second circuit portion CP2 is connected to the capacitor to close a discharging path of the capacitor.

There is an additional fourth circuit portion CP4 in parallel with the series combination of the first and third circuit portions. This arrangement may thus be considered to be a capacitor version of the circuit of Figure 5.

The dimming switch S1 controls the coupling of the driver to the whole circuit. In addition, there is a second switch S1' which is used to complete the capacitor discharge path when the dimming switch S1 is open. The two switches S1 and S1' are operated in complementary manner and they may considered to be sub-switches of a single switching arrangement.

In the case of a capacitor, when a current is supplied to the circuit, the capacitor draws a decreasing amount of current as it charges (i.e. it has an increasing effective impedance). For a light source in series with the capacitor such as LS1, there will be a corresponding decreasing current, whereas for a light source in parallel such as LS4, there will be a corresponding increasing current to maintain a fixed total current. The controller can control a ratio of current delivery to the capacitor and current isolation from the capacitor using the switches, and in this way control the currents flowing in different parts of the circuit.

When the switch S1 is opened and the switch S1' is closed, the capacitor is able to discharge through the second light source. The two sub-switches are controlled synchronously, and together implement the required current paths.

A capacitor circuit has the advantage that it gives a higher energy density than an inductor.

Figure 10 shows the corresponding current waveforms.

The ramping up and down of current is shown as linear to make the plots simple to understand. In practice, they will follow curves depending on the LED and the resistor characteristics.

As shown, when switch S1 is closed (and S1' open), the current to the first light source decays as the capacitor charges and the current to the fourth circuit portion increases to maintain the fixed total current. When switch S1' is closed (and S1 open), the capacitor discharges through the second light source. The longer the switch S1 is closed, the more the capacitor C1 becomes charged/saturated. After saturation, there is no charging current to the capacitor C1 as well as to drive the first circuit portion. The discharging current to the second circuit portion is also limited by the saturation. Thus the fourth circuit portion will become more and more dominant, and a contribution to the overall light output characteristic from the first and second light sources are adjusted.

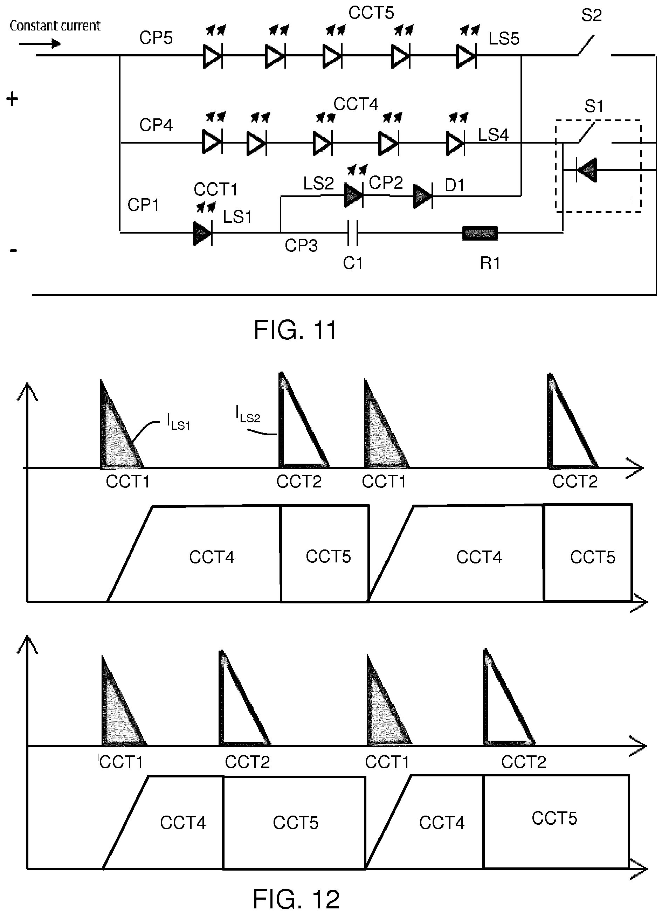

Figure 11 shows a modification to the circuit of Figure 9, in which there is a fifth circuit portion CP5 comprising a fifth light source LS5 having a fifth light output characteristic CCT5 and a second switch S2 for connecting the driver to the fifth circuit portion. The fifth circuit portion CP5 and second switch S2 form a parallel branch to the remainder of the circuit, and the controller is adapted to turn on the second switch and the switch for controlling the energy transfer in an alternative manner. Further, the second circuit portion CP2 connects also to the second switch S2, and the second switch S2 helps to complete the discharging path of the capacitor C1. A diode in parallel with the switch S1, which diode could be a body diode of a MOSFET if the switch S1 is a MOSFT, also helps to complete the discharging path of the capacitor C1.

This arrangement may thus be considered to be a capacitor version of the circuit of Figure 7.

Figure 12 shows the current waveforms, for two different duty cycles. Again, in the example of Figures 9 and 10, there is no light output when the switch S1 is open and after discharge of the capacitor. In Figure 12, the fifth light source provides an output during this time.

Alternatively, the capacitor C1 can also be replaced by an inductor. In this case, the longer the current goes to the circuit, the energy to the first light source becomes more dominant. While the energy goes to the second circuit portion discharged by the inductor and the energy to the fourth circuit portion will be limited by the saturation.

In the above embodiment, the energy associated with the reactive element that goes to the second circuit portion is the charged energy in the reactive element. Below will show embodiments wherein the energy associated with the reactive element that powers the second circuit portion is the remainder portion of the regulated current besides the current that charges the reactive element.

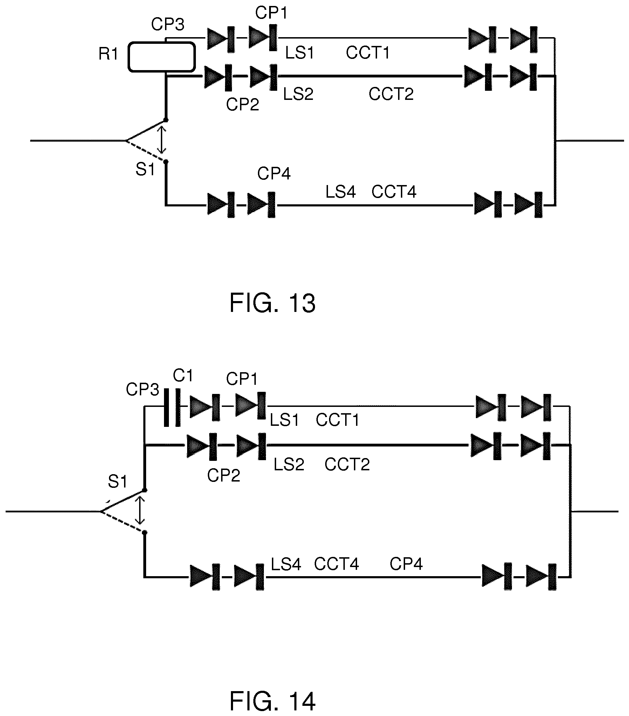

Figure 13 shows an example.

The and second light sources are both in the forward direction, i.e. their anodes connect either directly or indirectly (i.e. through the reactive element) to the positive driver output, and the reactive element regulates the current to both. In this example, the second circuit portion CP2 is in parallel with the series combination of the first and third circuit portions CP1, CP3.

The reactive element may again be a capacitor or an inductor, and the lighting circuit further comprises a discharging circuit for the reactive element. The discharging circuit is not shown in this embodiment but can be designed by those skilled in the art, for example for using the discharging current to supply other circuits like other light sources, an IC or a MCU, or just to deplete it via a dummy load.

The current distribution among the first circuit portion CP1 and the second circuit portion CP2 can be determined by the reactive element, similar to the embodiments described above.

A fourth circuit portion CP4 is in parallel with the second circuit portion CP1 and the switch S1 controls the connection of the driver output current either to the first to third circuit portions or to the fourth circuit portion.

During a charging phase, the capacitor or inductor take energy from the driver and this influences the splitting of current. During a discharging phase, the driver connects to the fourth light source and the reactive element releases energy to the first or second light source. In combination, the overall light output is controlled.

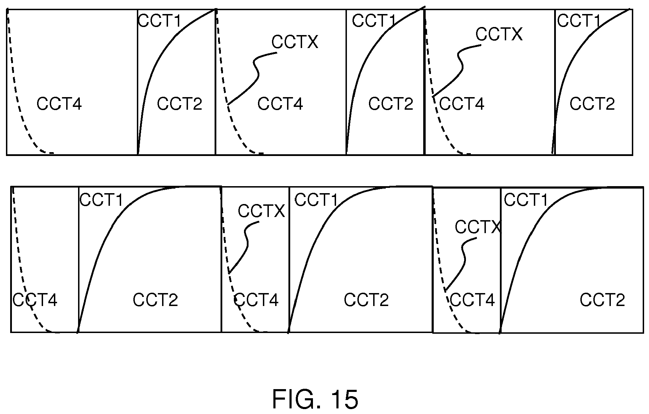

Figure 14 shows an implementation of the circuit of Figure 13 in which the reactive element is a capacitor C1. Figure 15 shows the contributions to the light output of the three light sources overtime, for two different duty cycles of the switch.

The capacitor is charged when the switch S1 connects to the first to third circuit portions. During charging, the current (also through the first light source) drops, from a high value, until the capacitor is fully charged. The current through the second light course increases from a low value correspondingly, to maintain the same total current. This is shown in Figure 15 as the constant current shared between CCT1 and CCT2 in the ratio shown by the exponential line.

When the driver connects to the fourth circuit portion by the switch S1, the capacitor may discharge through an extra light source which is not shown, which functions as a discharge path. The light output is shown schematically as CCTX. The fourth light source is turned on during this time. The discharge may be through other components as mentioned above.

Alternatively, the capacitor is replaced by an inductor. The current to the first circuit portion changes from large to small, and the current to the second circuit portion changes in the opposite sense.

The various circuit examples above have different LED branches. Multiple color LEDs may be provided within an individual branch.

As is clear from the examples above, the controller closes the switch (or controls the multiple switches) cyclically, and during each cycle it routes energy from the driver to the first light source and the reactive load for a time duration.

This time duration may be adjustable from a first duration which is shorter than a period by which the reactive element reaches saturation to a second duration which is equal to or longer than a period by which the reactive element reaches saturation, thereby the controller being adapted to adjust the ratio of energy to the first light source and to the second light source. By adjusting the length of the pulse up to a duration corresponding to saturation of the reactive element, the greatest range of control is made possible. The duration shorter than saturation is useful in some embodiments: for example for adjusting the respective contribution of CCT1 and CCT2 in the embodiments of Figures 3, 5 and 7. Reaching the saturation and beyond is useful for some embodiments: for example for adjusting the dominance of CCT4 (thereby the dominance of CCT1 plus CCT2) in the embodiment of Figures 5, 7, 9 and 11, and adjusting respective contribution of CCT1 and CCT2 in the embodiments of Figures 13 and 14.

For the examples above with a period of no light output (e.g. Figures 6 and 10), by providing a variable time interval between the time durations, a light output intensity may be adjusted. The controller may adjust a duty cycle and a frequency of the switch control signal. By controlling these two parameters, both the output power and the overall lighting characteristics, in particular CCT, can be controlled.

The invention enables a dimming curve to follow the BBL line of Figure 2 much more closely than a linear plot.

The also provides a method of controlling the lighting circuit, which comprises controlling the passage of energy from the driver to the reactive element and to the first light source so as to provide a third time-varying current to the reactive element and a first time-varying current to the first light source, or from the reactive element to the second light source by controlling the timing of operation of a switch, thereby to control a ratio of energy to, thereby a ratio of light output characteristics from, the first and second light sources.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A lighting circuit, comprising:
a driver for providing a regulated current;
a lighting load at the output of the driver, the lighting load comprising:
a first circuit portion (CP1) comprising a first light source (LS1) having a first light output characteristic;
a second circuit portion (CP2) comprising a second light source (LS2) having a second light output characteristic; and
a third circuit portion (CP3) comprising a reactive element;
the lighting circuit further comprising:
a switching circuit for allowing the regulated current from the driver to flow to the first and the third circuit portions so as to provide a third time-varying current to the reactive element and a first time-varying current to the first light source (LS1), and for allowing an energy associated with the reactive element to flow to the second light source (LS2); and
a controller for controlling the timing of operation of the switching circuit thereby controlling a duration of allowing the regulated current or a portion thereof to flow to the first circuit portion (CP1) and the third circuit portion (CP3) and thereby also controlling the energy flow to the second light source, so as to control a contribution to the overall light output characteristic from the first and second light sources (LSI, LS2).

2. A lighting circuit as claimed in claim 1, wherein the driver is adapted to output a current with a constant peak amplitude, and
the switching circuit further comprises a switch for selectively connecting or disconnecting the driver output current with respect to the first circuit portion (CP1) and the third circuit portion (CP3) of the lighting circuit, or the switching circuit is integrated in the driver and adapted to make the driver to output the regulated current in a pulse width modulation manner.

3. A lighting circuit as claimed in claim 1 or 2, wherein the light sources each comprise a LED arrangement, and the third circuit portion (CP3) is in parallel with the first circuit portion (CP1) such that the third time-varying current into the reactive element and the first time-varying current to the first light source are separate components of the regulated current.

4. A lighting circuit as claimed in claim 3, wherein the reactive element is a reactive element adapted to charge with the third time-varying current and discharge stored energy to the second circuit portion, and the controller is adapted to allow all the regulated current to flow to the first circuit portion (CP1) and the third circuit portion (CP3),
the first, second and third circuits portions are connected in parallel with the first and second light sources having an opposite polarity.

5. A lighting circuit as claimed in claim 4, further comprising a fourth circuit portion (CP4) comprising a fourth light source (LS4) having a fourth light output characteristic, said fourth circuit portion (CP4) connected between the parallel connection of the first and the third circuit portions and the second circuit portion.

6. A lighting circuit as claimed in claim 1 or 2, wherein the first circuit portion (CP1) is in series with the reactive element and thereby in a charging path such that the third time-varying current into the reactive element and the first time-varying current to the first light source are same components of the regulated current, and the second circuit portion (CP2) is connected to the capacitor to close a discharging path of the reactive element.

7. A lighting circuit as claimed in claim 7, wherein the controller is adapted to control a portion of the regulated current to flow to the first circuit portion (CP1) and the third circuit portion (CP3): and
the lighting circuit further comprises a fourth circuit portion (CP4) comprising a fourth light source (LS4) having a fourth light output characteristic, said fourth circuit portion (CP4) connected in the parallel with the series connection of the first circuit portion and the reactive element and adapted to receive a rest of the regulated current.

8. A lighting circuit as claimed in any one of claim 1 to 7, further comprising a fifth circuit portion (CP5) comprising a fifth light source (LS5) having a fifth light output characteristic and a second switch for connecting the driver to the fifth circuit portion (CP5), wherein the fifth circuit portion (CP5) and second switch form a parallel branch to the remainder of the circuit, and the controller is adapted to turn on said second switch and the switch for controlling the energy transfer in an alternative manner.

9. A lighting circuit as claimed in claim 1 or 2, wherein the first circuit portion (CP1) and the third circuit portion (CP3) are in series such that the third time-varying current into the reactive element and the first time-varying current to the first light source are same a portion of the regulated current, the second circuit portion (CP2) is in parallel with the series combination of the first and third circuit portions (CP1, CP3) such that the energy associated with the reactive element to flow to the second light source is the rest of the regulated current.

10. A lighting circuit as claimed in claim 9, further comprising a discharging circuit to discharge the reactive element of the third circuit portion.

11. A lighting circuit as claimed in any one of claims 1 to 10, wherein the controller is adapted to close the switch cyclically, and during each cycle to route energy from the driver to the first light source and the reactive load for the time duration, wherein the time duration is adjusted:
either less than a period by which the reactive element reaches saturation; or
equal or more than the period by which the reactive element reaches saturation, thereby the controller being adapted to adjust the ratio of energy to the first light source and to the second light source.

12. A lighting circuit as claimed in any one of claims 1 to 11, wherein the reactive element is an inductor or a capacitor.

13. A lighting circuit as claimed in any one of claims 1 to 12, wherein said light output characteristic is a color or color temperature.

14. A lighting circuit as claimed in claim 13, wherein the controller is adapted to control the switch with a variable time interval between the time durations, thereby setting a light output intensity.

15. A method of controlling a lighting circuit, the lighting circuit comprising: a driver; a first circuit portion (CP1) comprising a first light source (LS1) having a first light output characteristic; a second circuit portion (CP2) comprising a second light source (LS2) having a second light output characteristic; and a third circuit portion (CP3) comprising a reactive element, wherein the method comprises:
controlling the passage of energy from the driver to the reactive element and to the first light source (LS1) so as to provide a third time-varying current to the reactive element and a first time-varying current to the first light source (LS1), and from the reactive element to the second light source (LS2) by controlling the timing of operation of a switch, thereby to control a contribution to the overall light output characteristic from the first and second light sources.
